# DEMANDE DE BREVET EUROPEEN

(11) **EP 0 913 725 A1**
(43) Date de publication de la demande: **06.05.1999**
(21) Numéro de dépôt: 98402671.6
(22) Date de dépôt: 27.10.1998
(51) Int. Cl.: G02F 1/135

(54) **Modulateur spatial de lumière optiquement adressable à structure polymérique et cristal liquide**

(30) Priorité: 29.10.1997 FR 9713566
(71) Demandeur: COMMISSARIAT A L'ENERGIE ATOMIQUE, 75015 Paris (FR)
(72) Inventeur: Bartkiewicz, Stanislaw, 58-309 Walbryzch (PL); Kajzar, François, 78690 Voisins le Bretonneux (FR); Miniewicz, Andrzej, 54-432 Wroclaw (PL)
(74) Mandataire: Poulin, Gérard

(57) **Abrégé**

L'invention a pour objet un dispositif modulateur spatial de lumière comportant, entre deux électrodes (6, 8) au moins une couche de polymère photoconducteur (10, 12) et un cristal liquide (13).

## Description

### Domaine technique et art antérieur

L'invention concerne les cellules ou dispositifs du type modulateur spatial de lumière.

L'invention concerne également diverses applications d'un tel modulateur. En particulier, sont concernées les applications à la réalisation d'amplificateurs optiques, de systèmes optiques pour la reconnaissance d'image. Une autre application concerne l'utilisation d'une cellule selon l'invention pour l'écriture, le stockage et la lecture de l'information. Encore une autre application est la réalisation d'un système optique pour la transformation d'un signal optique incohérent en signal cohérent.

L'article de N. Peyghambarian et al. intitulé "Organic Photorefractive materials", paru dans "Photoactive Organic Materials", F. Kajzar et al., Editors, Kluwer Academic Publishers, Dordrecht 1996, p. 281-292 décrit le principe de fonctionnement des cellules à effet photoréfractif, en particulier dans le cas où des matériaux polymères sont utilisés.

D'une manière générale, les matériaux photoréfractifs présentent une variation d'indice de réfraction sous une certaine illumination : ceci est lié à la génération de charges et à leur séparation par un champ électrique appliqué. Dans les expériences à deux faisceaux incidents sous un angle, un réseau d'interférence est créé dans le matériau photoréfractif, conduisant à une photogénération des charges dans les endroits correspondant aux maxima d'interférence (zones claires) et à leur diffusion dans les zones sombres (minima d'interférence). En conséquence, un réseau de charge est créé qui est déphasé par rapport au réseau d'interférence. Ce déphasage est dû à l'action conjointe du champ électrique appliqué et du champ créé par les charges électriques (champ de charges d'espace). Il est à l'origine d'un transfert de photons d'un faisceau vers l'autre (du faisceau le moins intense vers le faisceau le plus intense, ou l'inverse, en fonction du déphasage entre les deux réseaux), donc à une amplification d'un des faisceaux lumineux.

Un objet peut être positionné sur le trajet d'un des faisceaux. Il modifie les franges d'interférence et on peut donc insérer l'image de l'objet dans le matériau photoréfractif. Cette image peut par la suite être relue avec un autre faisceau laser. On peut donc stocker et lire des informations dans le matériau. L'image inscrite dans celui-ci peut être aussi comparée avec une image de référence (corrélation). Ceci permet son identification. Cette propriété peut trouver de nombreuses applications dans la reconnaissance d'objets, d'empreintes digitales, de photos, etc.

Un matériau photoréfractif présente :
**1.** D'une part une propriété de photoconductivité, ou de capacité à générer des charges sous l'action d'un certain rayonnement, associée à la propriété de transport des charges.
**2.** D'autre part un effet électrooptique (effet Pockels) accompagné (ou non) d'une contribution orientationnelle.

Les paramètres déterminant les performances de ce type de matériau sont :
**1.** Le gain : il doit être important pour les applications en amplification de la lumière et pour l'efficacité de diffraction.
**2.** Le temps de réponse ou, en d'autres termes, la vitesse avec laquelle le réseau de diffraction est créé ou effacé.

Les matériaux photoréfractifs utilisés actuellement sont :
**1.** Des monocristaux sans centre d'inversion. Les plus connus sont le BSO (Bi₁₂SiO₃) et le BTO (Bi₁₂TiO₃). Leur désavantage principal est leur prix, leur faible reproductivité et le temps de réponse, qui est long.
**2.** Des polymères photoréfractifs qui sont composés d'un mélange de polymère photoréfractif de type PVK (poly vinyl carbazole), molécules dipolaires électrooptiques, et de photogénérateurs de charge ainsi que de plastifiant pour abaisser la température de transition vitreuse et rendre les molécules plus mobiles. Des exemples de ces matériaux sont décrits dans l'article de N. Peyghambarian et al., déjà cité ci-dessus. Ces matériaux sont nettement moins chers que les monocristaux et ils donnent des gains de l'ordre de 220 cm⁻¹. Leur utilisation pratique est difficile pour deux raisons :
   *1.* La nécessité d'appliquer un champ électrique important (de l'ordre de 600 000 V/cm) pour avoir un gain raisonnable (G=100cm⁻¹);
   *2.* Le temps de réponse, quoique plus court que dans les monocristaux, est de l'ordre d'une seconde.

L'utilisation d'un cristal liquide, dopé avec des générateurs de charge, permet d'en améliorer le gain (la valeur rapportée est de 640 cm⁻¹ et le temps de réponse de l'ordre de 40 ms).

Il se pose donc le problème de trouver une nouvelle structure de cellule ou de modulateur spatial ayant des propriétés améliorées en termes de gain, de temps de réponse et de champ électrique opérationnel.

### Exposé de l'invention

L'invention concerne un modulateur spatial de lumière comportant, entre deux électrodes, au moins une couche de polymère photoconducteur et un cristal liquide : le polymère génère, sous illumination, des charges électriques qui sont séparées par diffusion ; le champ électrique, appliqué par les électrodes, aligne les molécules de cristal liquide, et il se crée dans la structure un réseau d'indice par réorientation des molécules du cristal liquide. Par rapport à l'art antérieur, dans lequel les fonctions de génération des charges et d'alignement n'étaient pas séparées, l'utilisation du cristal liquide permet une réorientation des molécules plus rapide sous une tension plus faible ; l'utilisation du polymère photoconducteur permet d'éviter un dopage du cristal liquide.

Le polymère photoconducteur est un polymère conjugué à une dimension d'électrons π, orientable et pouvant servir de couche d'ancrage, pour le cristal liquide, par l'orientation des chaînes de molécules qui le constituent.

Le polymère de la couche de polymère peut être, par exemple, du poly(alkyl)thiophène ou du polydiaéthylène, ou du polyaniline ou du polypyrrole ou similaire.

Dans le modulateur selon l'invention, il n'est pas fait usage, à la différence des systèmes photoréfractifs connus, de l'effet Pockels pur ; le cristal liquide, en plus de l'effet Pockels, apporte aussi une contribution rotationnelle dominante. Le polymère utilisé est photoconducteur, et n'a pas besoin d'être photoréfractif. Le modulateur selon l'invention fonctionne donc sur des principes différents des modulateurs selon l'art antérieur.

De préférence, et afin de limiter l'effet de vieillissement du cristal liquide, on utilise un cristal liquide le plus pur possible. La pureté peut être mesurée par la résistivité du cristal. En particulier, on utilise par exemple des cristaux de résistivité comprise entre 10⁻⁸ et 10⁻¹¹Ω⁻¹.cm⁻¹ (valeurs mesurées dans l'obscurité).

L'invention concerne également un dispositif amplificateur optique comportant un dispositif modulateur spatial de lumière tel que ci-dessus.

L'invention a en outre pour objet un dispositif pour la reconnaissance d'images comportant :
- des moyens, incorporant un dispositif modulateur tel que décrit ci-dessus, pour la réalisation d'une image de corrélation entre une image de référence et une image inconnue,
- des moyens pour visualiser ladite image de corrélation.

Une autre application objet de l'invention concerne un dispositif pour le stockage d'informations comportant un modulateur spatial tel que décrit ci-dessus.

Enfin, l'invention a aussi pour objet un dispositif pour la transformation d'une image incohérente en image cohérente, comportant un modulateur spatial tel que décrit ci-dessus.

### Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :
- La figure 1 représente une cellule, à effet photoréfractif, conforme à l'invention.
- La figue 2 représente une première application de l'invention, à la réalisation d'un amplificateur optique.
- La figure 3 représente schématiquement un amplificateur optique selon l'invention.
- Les figures 4A et 4B représentent respectivement la variation du gain G et la variation temporelle de l'efficacité de diffraction pour un dispositif amplificateur selon l'invention.
- La figure 5 représente une autre application de l'invention, à la reconnaissance d'objets ou d'images.
- Les figures 6A et 6B illustrent une autre application de l'invention, au stockage d'informations.
- La figure 7 illustre une autre application de l'invention, à la réalisation d'un système optique pour transformer un faisceau incohérent en faisceau cohérent.

### Description détaillée de modes de réalisation de l'invention

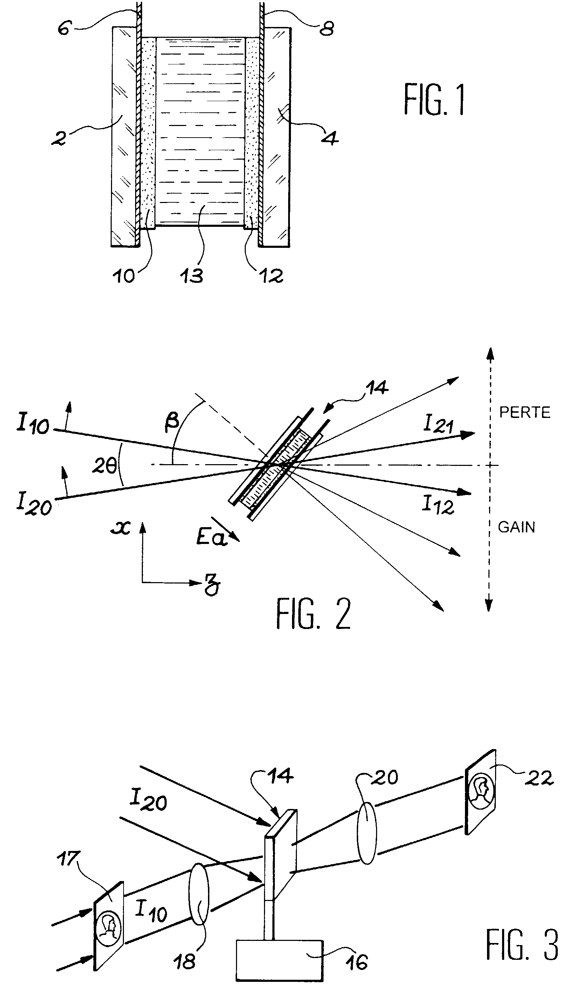

Une structure d'une cellule selon l'invention est représentée en figure 1.

Deux substrats 2, 4 en verre sont, chacun, munis d'une électrode 6, 8 constituées par exemple de deux couches fines 6, 8 conductrices et semi-transparentes (par exemple en ITO). La cellule comporte en outre une couche fine 10, 12 de polymère photoconducteur, par exemple du type poly(3-alkyl)thiophène. Cette couche 10, 12 est orientée par brossage pour induire l'orientation des molécules de cristaux liquides par l'ancrage. Elle a une épaisseur pouvant être comprise entre 1nm et 1000nm (par exemple : 60nm). Une cellule est fabriquée par l'assemblage de deux structures 2, 6, 10 et 4, 8, 12 avec les couches de polyimides 10, 12 à l'intérieur. L'épaisseur de la cellule est déterminée par l'utilisation de cales d'épaisseur donnée. Elle est par exemple de 10 µm mais elle peut être plus épaisse ou plus fine (par exemple, comprise entre 1 µm et 15 µm) et jusqu'à 100 µm ou plus. La cellule est remplie par la suite avec le cristal liquide nématique 14 par exemple un 4-cyanobiphényl, ou un 5-cyanobiphényl ou un azobenzène avec des chaînes alkyles en utilisant une technique par viscosité ou par pompage. Ce peut être aussi un cristal liquide smectique ou un mélange de cristaux liquides différents. Le champ électrique appliqué sur les électrodes 6, 8 permet de tourner les mesogènes du cristal liquide. Chaque couche 10, 12 de polymère photoconducteur sert à la photogénération de charges et à leur transport.

L'utilisation du polymère photoconducteur 10, 12 permet de s'affranchir du dopage avec des molécules ayant la propriété de générer des charges électriques sous illumination.

Les paramètres de gain, de temps de réponse et de tension de travail sont nettement meilleurs que ceux publiés dans la littérature. Un gain très élevé est obtenu, avec un temps de réponse très faible et une faible tension de travail. Le gain peut être encore amélioré en utilisant des cellules plus épaisses.

Un premier exemple d'application concerne la réalisation d'un amplificateur optique, comme illustré sur la figure 2. La référence 14 désigne un modulateur du type décrit ci-dessus en liaison avec la figure 1. Les références I₁₀ et I₂₀ désignent respectivement un signal à amplifier et un faisceau pompe, tandis que les référence I₂₁ et I₁₂ désignent respectivement un faisceau dont l'intensité a diminué (perte) et un faisceau amplifié (gain). Eₐ est l'intensité du champ électrique appliqué entre les électrodes 6, 8. Un tel amplificateur optique fonctionne comme décrit ci-dessus en ce qui concerne le modulateur 14 et, en ce qui concerne le système, comme décrit, par exemple, dans l'ouvrage de P. Yeh, intitulé "Introduction to Photorefractive Nonlinear Optics", p. 354-366, John Wiley & Sons, Inc., (1993). Une représentation schématique d'un amplificateur optique est en outre donnée sur la figure 3 : l'image d'entrée 17 est illuminée et il en résulte un signal I₁₀ à amplifier, qui est focalisé sur le modulateur 14 par une lentille 18, les électrodes du modulateur étant reliées à une alimentation 16. Un faisceau de pompage I₂₀ permet d'amplifier le faisceau I₁₀. Il en résulte, après traversée de la lentille 20, une image amplifiée 22 de l'image d'entrée 17.

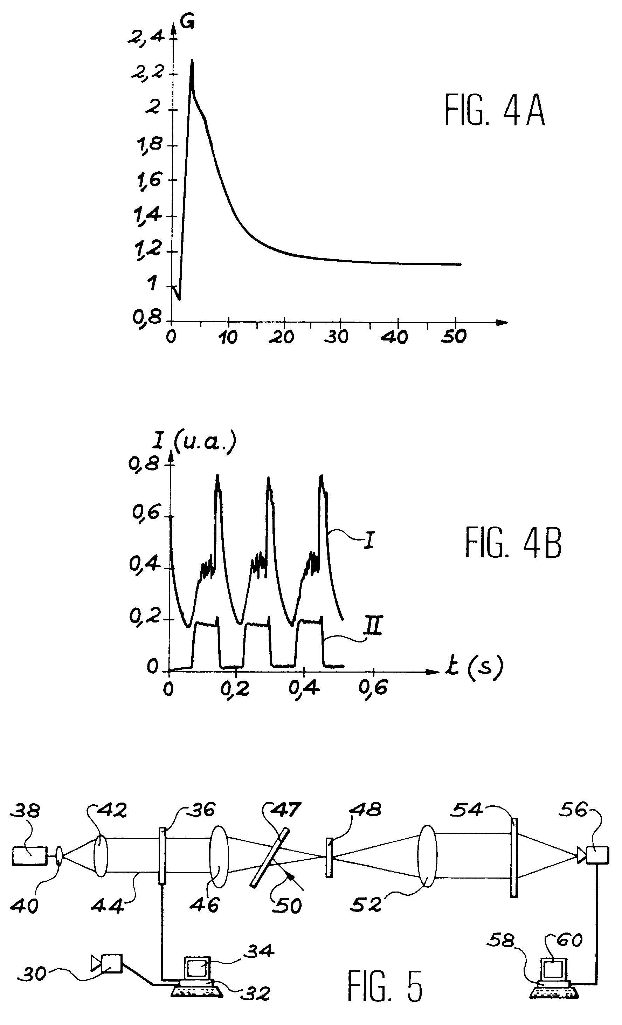

Les figures 4A et 4B représentent respectivement, pour une structure du type de celle décrite ci-dessus, en liaison avec la figure 2, la variation du gain G en fonction de la tension électrique appliquée et la variation temporelle de l'efficacité de diffraction pour des tensions électriques appliquées U₁=7volts (courbe I) et U₂=20volts (courbe II). Ces courbes ont été obtenues avec un dispositif 14 dont la normale au plan de la structure est inclinée de 45° par rapport à la direction de propagation de l'onde lumineuse I₁₀ (voir figure 2) et pour une cellule d'épaisseur 10 µm. On peut en déduire les paramètres suivants :
- gain : G=1000cm⁻¹,
- temps de réponse : t=10 millisecondes,
- champ électrique d'opération : E= 3000volts/cm.

On constate sur cet exemple que tous les paramètres sont nettement meilleurs que ceux publiés dans la littérature : le gain est très élevé, le temps de réponse est très rapide, et la tension de travail est faible.

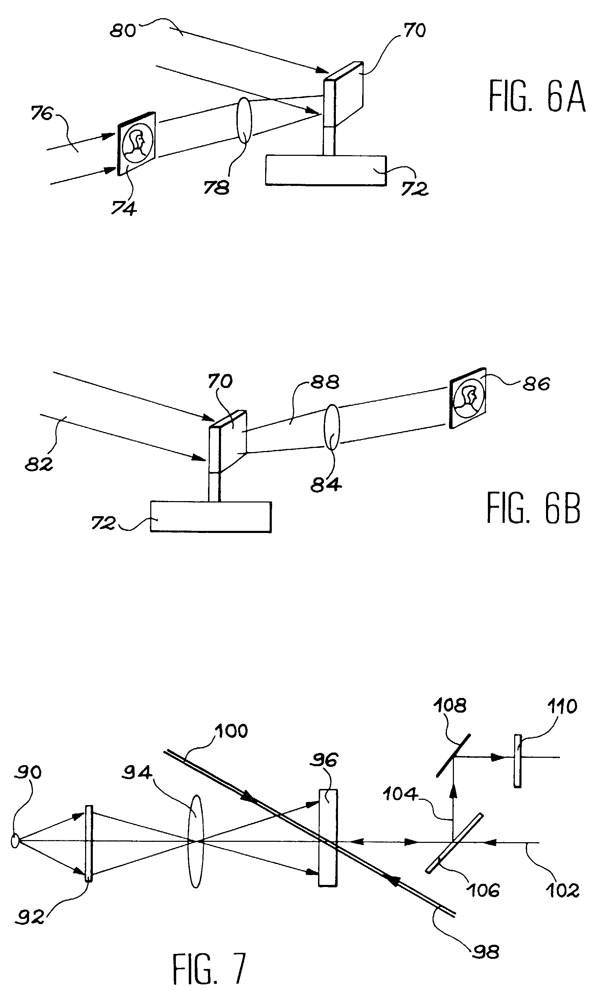

Un deuxième exemple d'application concerne la réalisation d'un système optique pour la reconnaissance d'objets ou d'images. Un tel système est représenté schématiquement sur la figure 5. Une image de référence et une image inconnue sont enregistrées par une caméra CCD 30 commandée par un micro-ordinateur 32 auquel est associé un écran de visualisation 34. Les images obtenues sont transmises à un modulateur spatial de lumière 36 mettant de préférence en oeuvre l'invention éclairé par un faisceau laser 44 provenant d'un laser 38. Les références 40 et 42 désignent respectivement un agrandisseur de faisceau et une optique de collimation. Le faisceau laser traverse ensuite le modulateur spatial 36 mettant également de préférence en oeuvre l'invention puis une lentille de Fourier 46 qui permet de générer une transformée de Fourier de l'information portée par le modulateur spatial 36. Cette transformée de Fourier module l'indice d'une cellule 48 à effet photoréfractif et y inscrit par conséquent un schéma d'interférences entre l'image de référence et l'image de l'objet inconnu. La cellule 48 est du type de la cellule selon l'invention, déjà décrite ci-dessus. Un élément séparateur 47 permet de diriger un faisceau laser (par exemple un faisceau d'un laser hélium-néon, à 633 nm) en direction de la cellule 48, afin de lire celle-ci. Une caméra CCD 56 permet de lire l'information contenue dans le plan de corrélation 54 après traversée, par le faisceau de lecture, successivement de la cellule 48 et de la lentille de Fourier 52. La caméra CCD 56 est reliée à des moyens de contrôle 58, du type micro-ordinateur, associé à un écran de visualisation 60. L'image obtenue représente donc des pics de corrélation plus ou moins intenses suivant le degré de ressemblance de l'objet de référence et de l'objet inconnu.

D'autres informations, concernant ce type de dispositif, peuvent être trouvées dans l'article de H. RAJBENBACH et al., intitulé "Compact photorefractive correlator for robotic applications", paru dans Applied Optics, vol. 31, n°26, pp. 5666-5674, 1992. D'autres informations, concernant en particulier le modulateur spatial de lumière peuvent être trouvées dans l'ouvrage de P. YEH, intitulé "Introduction to Photorefractive Nonlinear Optics", pages 361 et suivantes, John Wiley & Sons, 1993.

Un autre exemple d'application d'une cellule, ou d'un modulateur, selon l'invention concerne le stockage d'informations, et va être décrit en liaison avec les figures 6A et 6B. La référence 70 désigne un modulateur spatial de lumière à cristal liquide photoréfractif, conforme à la présente invention, et alimenté en tension par des moyens 72. La cellule 70 est disposée dans le plan d'une lentille 78. Une image 74 est disposée au plan focal objet de la même lentille. Un faisceau 76 traverse l'image 74, puis la lentille 78, et interfère avec un faisceau de référence 80 dans la cellule 70. Il en résulte un schéma d'interférence enregistré dans cette cellule. Ce schéma peut être lu (voir figure 6B) à l'aide d'un faisceau de lecture 82. Ce faisceau est diffracté lors de son passage à travers la cellule 70. Le faisceau diffracté 88 conduit, après traversée d'une lentille 84, à la formation d'une image amplifiée 86 dans le plan image de cette lentille. D'autres informations concernant cette technique peuvent être trouvées dans l'ouvrage de P. YEH déjà cité ci-dessus, chapitre 10, page 344.

Une autre application de l'invention concerne la réalisation d'un système optique pour transformer un faisceau incohérent, ou une image incohérente, en faisceau cohérent, ou en image cohérente. Cette application est illustrée sur la figure 7 qui représente un dispositif comportant une source de lumière 90, par exemple une source incohérente, dont le rayonnement traverse une image T(x,y) 92. Cette image traverse une lentille 94 et est projetée sur un modulateur 96, conforme à la présente invention. Ce modulateur 96 est éclairé par trois rayonnements laser 98, 100, 102 de même longueur d'onde et pouvant provenir du même laser. Les faisceaux 98 et 100 se propagent suivant la même direction, mais en sens contraire. En l'absence de l'image incohérente (obtenue par éclairement de l'image 92 par la source 90) les faisceaux 98, 100, 102 donnent naissance à une onde conjuguée 104, suivant les lois de la conjugaison de phase : le faisceau correspondant à l'onde 104 a la même longueur d'onde que les faisceaux 98, 100, 102 mais est, du point de vue temporel, le faisceau conjugué de l'onde incidente 102.

En présence de l'image 92 formée sur le modulateur 96, l'onde 104 présente les mêmes propriétés par rapport à l'onde incidente 102, mais porte, en plus, l'information correspondant à l'image 92. Le faisceau conjugué 104, qui est cohérent, est donc porteur de l'information sur l'image, alors que celle-ci était préalablement transmise par un faisceau incohérent. Une image cohérente 110 peut donc être obtenue en sortie du dispositif, après réflexion du faisceau 104 sur un miroir semi-transparent 106 et un miroir 108.

## Revendications

1. Dispositif modulateur spatial de lumière (14, 48, 70, 96) comportant, entre deux électrodes (6, 8), au moins une couche de polymère photoconducteur (10, 12) et un cristal liquide (13), le polymère photoconducteur étant un polymère conjugué à une dimension d'électrons π, orientable et pouvant servir de couche d'ancrage, pour le cristal liquide, par l'orientation des chaînes de molécules qui le constituent.

2. Dispositif modulateur spatial de lumière selon la revendication 1, le polymère photoconducteur étant du poly(alkyl)thiophène ou du polydiacétylène ou du polyaniline ou du polypyrrole.

3. Dispositif modulateur spatial de lumière, selon l'une des revendications 1 ou 2, le cristal liquide étant d'épaisseur comprise entre 1 µm et 100 µm.

4. Dispositif modulateur spatial de lumière selon l'une des revendications 1 à 3, la couche de polymère ayant une épaisseur comprise entre 1 nm et 1000 nm.

5. Dispositif modulateur spatial de lumière selon l'une des revendications 1 à 4, le cristal liquide étant nématique, ou smectique, ou un mélange de cristaux liquides.

6. Dispositif modulateur spatial de lumière selon la revendication 5, le cristal liquide étant un 4-cyanobiphényl, ou un 5-cyanobiphényl, ou un azobenzène avec des chaînes alkyles.

7. Dispositif selon l'une des revendications précédentes, les électrodes étant transparente ou semi-transparente.

8. Dispositif selon l'une des revendications 1 à 7, le cristal liquide (13) ayant une résistivité comprise entre 10⁻⁸Ω⁻¹cm⁻¹ et 10⁻¹¹Ω⁻¹cm⁻¹.

9. Dispositif amplificateur optique comportant un dispositif modulateur spatial de lumière (14) selon l'une des revendications 1 à 8.

10. Dispositif pour la reconnaissance d'images, comportant :
- des moyens, comportant un dispositif modulateur selon l'une des revendications 1 à 8, pour la réalisation d'une image de corrélation entre une image de référence et une image inconnue,
- des moyens (50, 47, 54, 56, 60) pour visualiser ladite image de corrélation.

11. Dispositif pour la reconnaissance d'images, comportant :
- un dispositif de visualisation (30, 32, 34) d'une image de référence et d'une image inconnue,
- un premier modulateur spatial de lumière (36),pour former une image correspondant à l'image de référence et à l'image inconnue,
- un second dispositif modulateur (48), selon l'une des revendications 1 à 8,
- des moyens (47) pour envoyer un faisceau de lecture (50) d'un réseau d'interférences formé sur le second dispositif modulateur,
- des moyens (56, 58, 60) de visualisation d'une image de la corrélation entre l'image de référence et l'image inconnue, correspondant à une image formée sur le second dispositif modulateur (48).

12. Dispositif pour le stockage d'informations, comportant un modulateur spatial de lumière (70) selon l'une des revendications 1 à 8.

13. Dispositif selon la revendication 12, comportant en outre des moyens (78) pour former sur le modulateur spatial de lumière (70) une image à stocker (74).

14. Dispositif selon la revendication 12 ou 13, comportant en outre des moyens (84) pour former une image (86) d'une image stockée sur le modulateur spatial de lumière (70).

15. Dispositif pour la transformation d'une image incohérente en image cohérente, comportant un modulateur spatial de lumière (96) selon l'une des revendications 1 à 8.

16. Dispositif selon la revendication 15, comportant en outre :
- une source incohérente (90) de lumière,
- des moyens pour produire un premier, un deuxième et un troisième faisceaux laser (98, 100, 102), et pour diriger les premier et deuxième faisceaux laser (98, 100) suivant une même direction et en sens contraire,
- des moyens (106) pour séparer un faisceau conjugué en phase (104) par rapport au troisième faisceau incident (102).
